# EUROPÄISCHE PATENTSCHRIFT

(11) **EP 1 990 654 B1**
(45) Veröffentlichungstag und Bekanntmachung des Hinweises auf die Patenterteilung: **09.12.2009**
(21) Anmeldenummer: 08008406.4
(22) Anmeldetag: 05.05.2008
(51) Int. Cl.: G01S 13/92, G01S 7/41

(54) **Verfahren und Vorrichtung zur Ermittlung der Fahrzeugklasse von Fahrzeugen**
Method and device for determining the automobile class of automobiles
Procédé et dispositif de détermination de la classe de véhicules

(30) Priorität: 07.05.2007 DE 102007022372
(43) Veröffentlichungstag der Anmeldung: 12.11.2008
(73) Patentinhaber: ROBOT Visual Systems GmbH, 40789 Monheim (DE)
(72) Erfinder: Behrens, Andreas, 40764 Langenfeld (DE)
(74) Vertreter: Schaller, Renate

(56) Entgegenhaltungen:
- EP-A- 0 067 905
- EP-A- 0 636 900
- EP-B- 0 935 764
- DE-A1- 3 810 357
- DE-A1-102004 040 015
- US-A- 5 402 346

## Beschreibung

Die Erfindung betrifft ein Verfahren, bei dem während des Durchfahrens einer auf eine Fahrbahn gerichteten Radarstrahlung das durchfahrende Fahrzeug klassifiziert wird.
Ein solches Verfahren ist gattungsgemäß aus der Patentanmeldung EP 0 067 905 A1 bekannt.

Doppler-Radarsysteme werden in der Verkehrsmesstechnik insbesondere für die Überwachung und Durchsetzung von gesetzlichen Geschwindigkeitsbegrenzungen für Fahrzeuge eingesetzt. Dabei kann es von Interesse sein, nicht nur die Geschwindigkeit einem Fahrzeug zugeordnet zu erfassen, sondern auch die Fahrzeuge zu klassifizieren.

Die EP 0 067 905 A1 betrifft ein Verfahren und eine Vorrichtung, bei dem/der über die Auswertung von Signalen einer Doppler-Radargeschwindigkeitsmesseinrichtung die Geschwindigkeit eines angemessenen Fahrzeuges und ein Unterscheidungskriterium zur Zuordnung des Fahrzeuges zu einer Fahrzeugklasse abgeleitet wird. Damit wird es möglich, eine Kamera bei Überschreitungen unterschiedlicher Höchstgeschwindigkeiten, zugeordnet zu unterschiedlichen Fahrzeugklassen, auszulösen. Als Unterscheidungskriterium wird ein Kriterium für die Fahrzeuglänge ermittelt, bestimmt durch die Anzahl der ausgesendeten Radarschwingungen, die während des Durchfahrens vom Fahrzeug reflektiert werden.

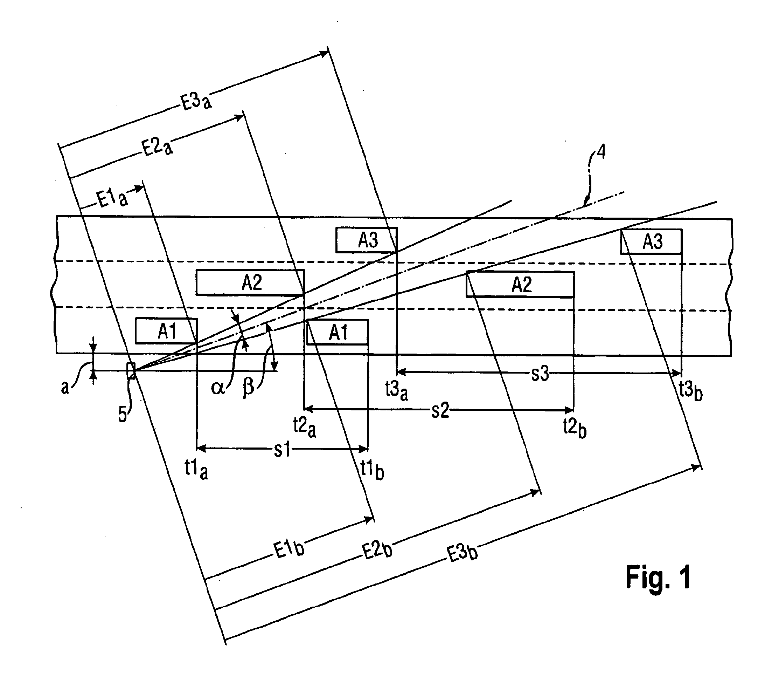

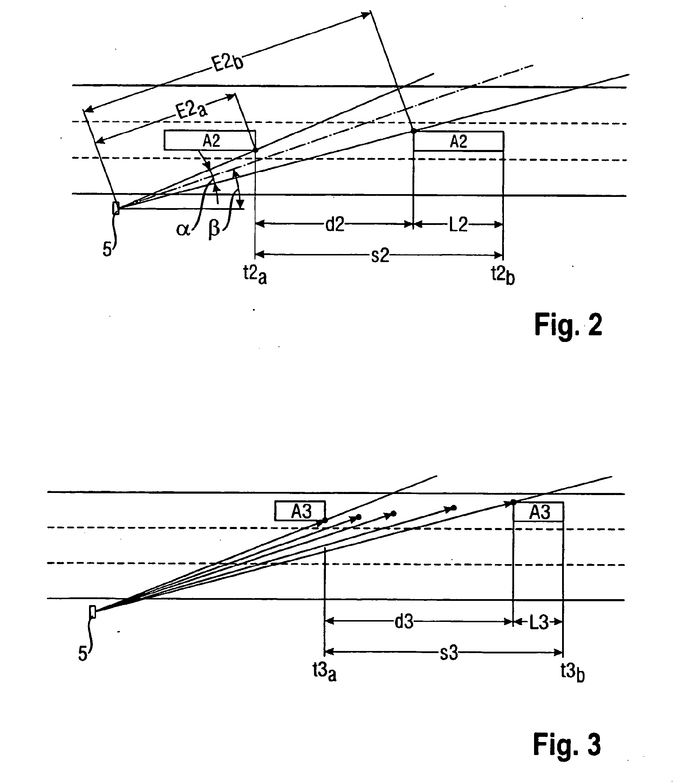

Die Anwendung des hier beschriebenen Messverfahrens auf eine Fahrbahn mit mehreren Fahrspuren soll an Hand von Fig. 1 erläutert werden.
In Fig. 1 ist beispielhaft die Durchfahrt von drei Fahrzeugen A1, A2, A3 dargestellt, die durch einen Radarkegel 4 mit einem Öffnungswinkel α fahren, dessen Hauptstrahl unter einem Aufstellwinkel β zur Fahrbahnrichtung ausgerichtet ist. Der Aufstellwinkel β kann auch durch einen Schielwinkel des Radarsensors realisiert werden. Dabei durchqueren die Fahrzeuge A1, A2, A3 den Radarkegel 4 jeweils auf einer anderen Fahrspur und folglich über unterschiedliche Entfernungsbereiche zum Radargerät 5. Die Fahrzeuge A1, A2, A3 treten zu einem Zeitpunkt t1ₐ, t2ₐ bzw. t3ₐ in einer Entfernung E1ₐ, E2ₐ bzw. E3ₐ in den Radarkegel 4 ein und zu einem Zeitpunkt t1_{b}, t2_{b} bzw. t3_{b} in einer Entfernung E1_{b}, E2_{b} bzw. E3_{b} aus dem Radarkegel 4 aus. Dazwischen legen sie aufgrund der zunehmenden Breite des Radarkegels 4 jeweils in Abhängigkeit von der Entfernung E zum Radargerät 5 unterschiedliche Fahrstrecken s1, s2 bzw. s3, d. h. Fahrstrecken unterschiedlicher Länge, zurück.
Aus der Anzahl der reflektierten Radarschwingungen zwischen einem Eintritts- und einem Austrittszeitpunkt tₐ bzw. t_{b} und dem Wissen um eine feste Strecke e (Produkt aus der halben Wellenlänge der Radarstrahlung und cos β), die ein Fahrzeug A1, A2 bzw. A3 jeweils während einer Radarschwingung zurücklegt, lässt sich die jeweilige Fahrstrecke s1, s2 bzw. s3, d. h. deren Länge, ermitteln, während der das Radargerät 5 reflektierte Radarschwingungen empfängt.
Da die Messung mit dem Eintreten der Front des Fahrzeuges beginnt und mit dem Austreten des Hecks endet, setzen sich die Fahrstrecken s1, s2 bzw. s3 aus der jeweiligen Durchfahrstrecke d1, d2 bzw. d3 durch den Radarkegel 4, d. h. deren Länge und der jeweiligen Fahrzeuglänge L1, L2 bzw. L3 zusammen (s. Fig. 2 und Fig. 3).

Die Fahrzeuglänge L lässt sich aus der Fahrstrecke s nur dann genau ermitteln, wenn entweder alle Fahrzeuge die gleiche Durchfahrstrecke d durchfahren oder aber wenn die Durchfahrstrecke d bekannt ist und somit aus der jeweiligen Fahrstrecke s die Fahrzeuglänge L ermittelt werden kann.

Da jedoch nicht primär das Ziel ist, die Fahrzeuglänge L zu bestimmen, sondern diese als Mittel dient, um das angemessene Fahrzeug klassifizieren zu können, ist es ausreichend, ein Längenkriterium festzustellen, welches es erlaubt, das Fahrzeug eindeutig nur einer Fahrzeugklasse zuzuordnen.

Aus der DE 693 17 186 T2 (Parallelanmeldung zur US 5,402,346 A) ist ein System zur Bestimmung von zumindest einem Verkehrsreglungsparameter für Fahrzeuge bekannt.

Um eine gleichzeitige Kontrolle über alle Fahrbahnen zu ermöglichen, wird eine gepulste Radarstrahlung auf die Fahrbahnen gerichtet. Die gebildete Radarkeule (hier Diagramm genannt) ist dem horizontalen Öffnungswinkel (hier Seitenwinkel genannt) nach schmal und um einen horizontalen Aufstellwinkel (hier ebenfalls Seitenwinkel genannt) zur Fahrbahn hin geneigt.
Als einer der bestimmbaren Verkehrsreglungsparameter ist die Fahrzeuglänge genannt.
Diese wird aus dem Produkt der ermittelten Fahrzeuggeschwindigkeit und der Dauer der Anwesenheit des Fahrzeuges im Radarkegel abzüglich des Weges, den das Fahrzeug beim Durchfahren des Radarkegels (Durchfahrtsweg) zurücklegt, gebildet. Dieser Durchfahrtsweg wird als fester Wert gebildet, aus der Länge eines vorgegebenen Entfernungsfensters und dem Kosinus des horizontalen Aufstellwinkels und des horizontalen Öffnungswinkels.

Im Vergleich zur EP 0 067 905 A1, wo eine Längenunterscheidung der Fahrzeuge allein anhand der zu den Fahrzeugen erfassten Fahrstrecken s ermittelt wird - in der DE 693 17 186 T2 werden die Fahrstrecken ebenfalls erfasst, allerdings über die ermittelte Geschwindigkeit und die Dauer der Anwesenheit des Fahrzeuges im Radarkegel - werden in der DE 693 17 186 T2 diese Fahrstrecken um einen festen Wert korrigiert.

Die Genauigkeit des Unterscheidungskriteriums Fahrzeuglänge wird dadurch nicht verbessert. In beiden Fällen sind die erhaltenen Längenwerte gleichermaßen fehlerbehaftet, da die Durchfahrtsstrecke für Fahrzeuge, die in unterschiedlichen Entfernungen zum Radargerät fahren, nicht konstant ist. Je größer der horizontale Öffnungswinkel des Radarkegels ist, desto größer ist dieser Fehler.

In der EP 0 067 905 A1 wird beispielhaft aufgezeigt, dass mit der Ermittlung des hier vorgeschlagenen Längenkriteriums, nämlich der Fahrstrecke s über die Anzahl der Radarschwingungen, ein Pkw mit einer Länge von 4,5 m und einer Breite von 1,5 m und ein Minibus mit einer Länge von 6 m und einer Breite von 2 m von einem Lkw mit einer Länge von 10 m und einer Breite von 2,5 m unterschieden werden kann, auch wenn sich die Fahrzeuge auf einer ersten, zweiten oder dritten Fahrspur befinden. Es wird allerdings auch deutlich, dass die Unterscheidung nur auf Grund der großen Längenunterschiede möglich ist, nämlich einerseits 4,5 m bzw. 6 m und andererseits 10 m, die größer sind als der Toleranzbereich der Durchfahrstrecken d, über die Fahrbahnbreite. Ein Pkw mit 4,5 m und ein Minibus mit 6 m lassen sich nicht sicher unterscheiden, wenn die Fahrzeuge irgendwo auf der Fahrbahnbreite, d. h. auf verschiedenen Fahrspuren fahren.

Für Anwendungsfälle, in denen mehr als die hier beispielhaft angegebenen drei Fahrspuren überwacht werden sollen oder eine feinere Unterscheidung als nur in Lkws und andere Fahrzeuge wünschenswert ist, ist die Ermittlung eines Längenkriteriums über die Bestimmung der Fahrstrecke s, z. B. über die Anzahl der reflektierten Radarschwingungen nach EP 0 067 905 A1, nicht hinreichend genau.

Eine Klassifizierung der Fahrzeuge kann neben der aufgezeigten Anwendung für eine von Fahrzeugklassen abhängige Geschwindigkeitslimitierung auch von Interesse sein, um zusätzlich zur oder anstatt der Geschwindigkeitsanzeige z. B. eine unberechtigte Benutzung einer für Schwerlasttransporte nicht zugelassenen Straße zu überwachen, die Nutzung der Fahrspuren durch unterschiedliche Fahrzeugklassen für statistische Zwecke zu erfassen oder mautpflichtige Fahrzeuge zu erkennen, sofern diese Pflicht durch ihre Fahrzeugklasse bestimmt wird. Auch kann es von Interesse sein, Motorräder oder Trikes, die nur am Heck über ein Kennzeichen verfügen, zu identifizieren, um im Falle eines Geschwindigkeitsverstoßes beschränkt auf diese Fahrzeuge ein zusätzliches Heckfoto zu schießen. Die Fahrzeuglänge könnte auch ein Kriterium sein, um eine gemessene Geschwindigkeit einem Fahrzeug in einer Gruppe von Fahrzeugen unterschiedlicher Länge zuzuordnen oder eine bereits getroffene Zuordnung zu verifizieren. Für die letztgenannte Anwendung wäre eine möglichst genaue Fahrzeuglängenbestimmung von Nutzen, um z. B. auch Pkws nach Fahrzeugtypen unterschiedlicher Länge zu klassifizieren.

Das in der Patentschrift EP 0 935 764 B1 offenbarte Verfahren betrifft kein Verfahren, mit dem eine Klassifizierung von Fahrzeugen erfolgt, sondern ein Verfahren, bei dem gleichzeitig mit der Geschwindigkeit auch die Entfernung erfasst wird, womit diese Lösung Relevanz zur erfindungsgemäßen Lösung erhält.

Die erfasste Entfernung dient hier dazu, das Fahrzeug einer Fahrspur zuzuordnen, um das angemessene Fahrzeug in einer Gruppe von Fahrzeugen, die auf unterschiedlichen Fahrspuren fahren, zu identifizieren.

Für die Entfernungsmessung mittels Radartechnik sind Impulsradargeräte und Dauerradargeräte mit frequenzmodulierten Dauerradarsignalen bekannt. In beiden Fällen wird die Entfernung nicht wirklich gemessen, sondern aus anderen Messgrößen abgeleitet.
Auch sind Dauerradargeräte bekannt, die über die Geschwindigkeit und die Entfernung hinaus auch die Ableitung eines Messwinkels zur Radarachse zulassen.

Wenn also in der nachfolgenden Beschreibung von Messwerten und einer gemessenen Geschwindigkeit, gemessenen Entfernung oder einem gemessenen Messwinkel die Rede ist, soll ein/eine abgeleitete Geschwindigkeit, Entfernung bzw. Messwinkel verstanden werden.

Impulsradargeräte ermitteln die Entfernung, d. h. den radialen Abstand von reflektierenden Fahrzeugteilen zur Radarantenne über eine Laufzeitmessung und leiten die Geschwindigkeit aus dem Laufzeitunterschied aufeinander folgender Messungen ab.

Mit einem Dauerradargerät wird bekanntermaßen eine in Amplitude und Frequenz konstante Dauerradarstrahlung ausgesendet. Bei der Reflexion an einem bewegten Objekt wie einem Fahrzeug erfährt diese Radarstrahlung eine in Abhängigkeit von der Geschwindigkeit des Fahrzeuges abhängige Frequenzverschiebung. Der in das Radargerät bzw. auf die Radarantenne zurückreflektierte Strahlungsanteil wird mit der ausgesendeten Radarstrahlung verglichen und eine Frequenzdifferenz, die so genannte Dopplerfrequenz gebildet, die zu der Geschwindigkeit des Fahrzeuges proportional ist.
Mit der Ausstrahlung einer Radarstrahlung in verschiedenen Frequenzen erhält man frequenzverschobene Reflektionsstrahlungen, aus deren Phasendifferenz die Entfernung abgeleitet wird.

Die Geschwindigkeit und die Entfernung werden somit bei gemeinsamer Erfassung über ein Messprinzip in einem gemeinsamen Messvorgang ermittelt, womit eine eineindeutige Zuordnung der Messwerte zueinander gesichert ist.
Natürlich ist eine Messwertermittlung auch über unterschiedliche Messprinzipien möglich, z. B. die Erfassung der Geschwindigkeit über das Doppler-Radar-Prinzip und die Erfassung der Geschwindigkeit über eine Impulslaufzeitmessung, wie in der EP 0 935 764 B1 beispielhaft angegeben.

Beim Doppler-Radar-Prinzip ist im Unterschied zur Geschwindigkeitsmessung, die sehr genau möglich ist, die Schwankungsbreite der Entfernungsmesswerte sehr groß. Die Punktreflexionen, die von einem Fahrzeug zur Radarantenne gelangen, erstrecken sich auf die gesamte Fahrzeugkontur, auf die der Radarquerschnitt projiziert wird. Der auf ein durch den Radarkegel fahrendes Fahrzeug projizierte Radarquerschnitt ändert sich in Abhängigkeit von der jeweiligen Geometrie des Fahrzeuges sowie seiner Position im Radarkegel, beginnend vom Eintritt in bis hin zum Austritt aus dem Radarkegel. Durch den Empfänger wird zu jedem Messzeitpunkt eine Summe von Messwerten (Messwertschar) aus Partialreflexionen detektiert. Aus diesen Messwerten wird z. B. über Mittelwertbildung ein Messwert gebildet. Für die nachfolgende Beschreibung soll unter der gemessenen Entfernung dieser gebildete Messwert verstanden werden.

Der Erfindung liegt die Aufgabe zu Grunde, ein Verfahren zur Klassifizierung von Fahrzeugen anhand eines Längenkriteriums und eine hierzu entsprechende Vorrichtung so weiterzuentwickeln, dass die Fahrzeuglänge genauer ableitbar ist, um eine feinere Klassifizierung der Fahrzeuge vornehmen zu können.

Diese Aufgabe wird durch ein Verfahren mit den Merkmalen des Anspruches 1 und für eine Vorrichtung mit den Merkmalen des Anspruches 13 gelöst.
Vorteilhafte Weiterbildungen sind in den Unteransprüchen beschrieben.

Es ist erfindungswesentlich, dass das Längenkriterium verbessert wird durch eine Einschränkung der Toleranzbreite für die Durchfahrstrecke d, indem die Durchfahrstrecke d über die Erfassung von Entfernungswerten E ermittelt wird und damit die Fahrzeuglänge L genauer ableitbar wird.

Die Erfindung soll nachfolgend beispielhaft anhand von Zeichnungen näher erläutert werden.
Es zeigen:
- Fig. 1: eine Prinzipskizze zur Erläuterung einer Messsituation,
- Fig. 2: eine Prinzipskizze zur Messwerterfassung eines Fahrzeuges A2 auf einer zweiten Fahrspur entfernt von einem Radargerät 5 gemäß eines 1. Ausführungsbeispieles,
- Fig. 3: eine Prinzipskizze zur Messwerterfassung eines Fahrzeuges A3 auf einer dritten Fahrspur entfernt von einem Radargerät 5 gemäß eines 2. Ausführungsbeispieles,
- Fig. 4: ein Schema für eine Vorrichtung.

Das erfindungsgemäße Verfahren stellt eine Weiterentwicklung eines Verfahrens gemäß der EP 0 067 905 A1 dar. Gleich dem hier beschriebenen Verfahren, wie es in der Beschreibung des Standes der Technik ausführlich an Hand der Fig. 1 beschrieben wurde, wird die Fahrstrecke s an Hand der Anzahl der reflektierten Radarschwingungen und der Strecke e, die das Fahrzeug A während einer Radarschwingung zurücklegt, ermittelt.

Alternativ kann die Fahrstrecke s aus der Durchfahrzeit (= t_{b} - tₐ) und der gemessenen Geschwindigkeit v bestimmt werden.

Zur Durchführung des Verfahrens ist ein Radargerät 5 mit einem Abstand a zur Fahrbahn unter einem spitzen horizontalen Aufstellwinkel β der Radarachse zur Fahrbahnrichtung neben einer Fahrbahn mit mehreren Fahrspuren positioniert. Der Aufstellwinkel β kann auch durch einen Schielwinkel des Radargerätes 5 realisiert werden. Bei einem Öffnungswinkel α des Radarkegels 4 durchfährt z. B. ein auf der Mitte der zweiten Fahrspur fahrendes Fahrzeug A2 den Radarkegel 4 in einem Entfernungsbereich von E2ₐ bis E2_{b} über eine Durchfahrstrecke d2 (Fig. 2).

Im Unterschied zum Stand der Technik, wo lediglich die Fahrstrecke s ermittelt wird und allein diese als Längenkriterium für die Klassifizierung herangezogen wird, wird bei einem erfindungsgemäßen Verfahren zusätzlich der Toleranzbereich der Durchfahrstrecke d eingeschränkt, indem wenigstens ein Entfernungswert E gemessen wird.

Die Einschränkung des Toleranzbereiches der Durchfahrstrecke d mit nur einem Entfernungswert E ist möglich, indem diesem Entfernungswert E eine zuvor ermittelte Durchfahrstrecke d zugeordnet wird, die durch den Öffnungswinkel α, den Aufstellwinkel β, den Abstand a des Radargerätes 5 zur Fahrbahn und eine mittlere Fahrzeugbreite bestimmt ist. Die ermittelte Fahrstrecke s abzüglich der Durchfahrstrecke d ergibt dann ein Maß für die Fahrzeuglänge L. Die Ermittlung der Durchfahrstrecke d anhand nur einem Entfernungswert E ist sehr grob, sie schränkt jedoch gegenüber dem Stand der Technik den Bereich der Längen für die Durchfahrstrecke d ein, weshalb der Toleranzbereich für die Fahrzeuglänge L vergleichsweise kleiner wird.

Um über die Entfernung E direkt auf eine Durchfahrstrecke d schließen zu können, soll in einem ersten Ausführungsbeispiel anhand von Fig. 2 eine Messwerterfassung der Entfernung E zum Zeitpunkt des Eintretens t2ₐ eines zweiten Fahrzeuges A2 in den Radarkegel 4 und zum Zeitpunkt des Austretens t2_{b} dieses Fahrzeuges A2 aus dem Radarkegel 4 gemessen werden. Die Durchfahrstrecke d2 ergibt sich hier aus der Formel d2 = cos (β - α/2) · E2_{b} - cos (β + α/2) · E2ₐ.

Durch Subtraktion der Durchfahrstrecke d2 von der in bekannter Weise ermittelten Fahrstrecke s2 ergibt sich die Fahrzeuglänge L2.
Durch eine genauere Ermittlung der Fahrstrecke s wird der Toleranzbereich für die Fahrzeuglänge L erheblich verringert. Die Fahrstrecke s als eine begrenzte Gerade zu betrachten, ist jedoch eine Idealisierung, bei der das Fahrzeug A, auf einen Punkt reduziert betrachtet, exakt seine Fahrtrichtung beibehält, d. h. die Fahrzeugspur, die das Fahrzeug A beschreibt, eine Gerade ist.

Selbst wenn das Fahrzeug A seine Fahrtrichtung beibehält, jedoch seine Ausdehnung über die Fahrzeugbreite mit in Betracht gezogen wird, beschreiben die Entfernungswerte E keine Gerade mehr, sondern eine Kurve, deren Länge zwingend länger der Geraden ist, d. h. die tatsächliche Durchfahrstrecke d ist länger als die mit einer beschriebenen Zweipunktmessung ermittelte Durchfahrstrecke d. Bei Änderungen der Fahrtrichtung kann die tatsächliche Durchfahrstrecke d zusätzlich verlängert werden.

Die Entfernungsmessung kann auch gemäß einem zweiten Ausführungsbeispiel über die gesamte Durchfahrzeit ermittelt werden, um aus ihr die Fahrzeugspur, die das Fahrzeug A beschreibt, und damit die Fahrstrecke s, d. h. deren Länge noch genauer zu ermitteln.

In Fig. 3 sind fünf Messzeitpunkte dargestellt. Es wird deutlich, dass die Entfernungswerte E nach dem Eintritt solange auf einer zur Fahrbahnrichtung parallelen Geraden liegen, solange das Fahrzeug A noch nicht vollständig in den Radarkegel 4 eingefahren ist. Anschließend steigt der Entfernungswert E schneller an, was sich damit begründet, dass das Heck als Reflektor zusätzlich zur Fahrzeugseite reflektiert. Hieraus wird auch deutlich, dass unterschiedliche Fahrzeugkonturen unterschiedliche Signalverläufe liefern, worauf an späterer Stelle noch einmal genauer eingegangen werden soll.
Die Entfernungswerte E folgen der beschriebenen Regel nicht, wenn das Fahrzeug A nicht stetig in Fahrtrichtung der Fahrbahn fährt.

Mit dem Eintreten eines Fahrzeuges A in den Radarkegel 4 (Messbereich) werden über die kontinuierliche Messung der Reflexionssignale, verursacht an den einzelnen Fahrzeugen A, deren Geschwindigkeit v, deren radialer Abstand a (Entfernung E) und gegebenenfalls der Messwinkel zur Radarachse bestimmt.

Die kontinuierliche Geschwindigkeitsmessung bzw. die Entfernungsmessung erfolgen, wie bereits beschrieben, durch Ausnutzung des Dopplerradareffektes bzw. entsprechend dem Frequenzumtastungsprinzip in Auswertung der Phasendifferenz reflektierter Radarsignale unterschiedlicher Frequenz.

Die Winkelmessung erfolgt gegebenenfalls mittels zweier Empfangsantennen über eine Triangulationsmessung. Hierzu kann beispielsweise eine Planarantenne gemäß der DE 10 2004 040 015 B4 verwendet werden.
Da die Geschwindigkeit v, die Entfernung E und der Messwinkel aus einer Messung abgeleitet werden, können die Messwerte zueinander eineindeutig zugeordnet werden.

Bei jedem Messvorgang entsteht somit für jedes Fahrzeug A im Radarkegel 4 ein Wertepaar aus Geschwindigkeit v und Entfernung E bzw. Wertetripel aus Geschwindigkeit v, Entfernung E und Messwinkel.

Je mehr Messwerte über eine gleiche Durchfahrstrecke d ermittelt werden, desto genauer lässt sich auf die Fahrzeugspur und damit die tatsächliche Durchfahrstrecke d schließen.

Daraus ergibt sich, dass man für eine hohe Genauigkeit unter Beachtung dieses Zusammenhanges möglichst viele Messungen durchführt.

Je kürzer die Durchfahrstrecke d bei gleicher Toleranzbreite der Entfernungswerte E und damit die absolute Abweichung der Durchfahrstrecke d ist, umso geringer ist die Toleranzbreite für die ermittelte Fahrzeuglänge L.

Daraus ergibt sich, dass man für eine hohe Genauigkeit unter Beachtung dieses Zusammenhangs den Messbereich einschränkt, indem er auf einen kleineren Winkelbereich, als er durch den Öffnungswinkel α gegeben ist, eingeschränkt wird. Zu diesem Zweck wird, wie bereits erwähnt, zur Entfernung E auch der Messwinkel erfasst.

Mit der permanenten Wiederholung des Messvorgangs (Tracking-Algorithmus) werden die Wertepaare bzw. Wertetripel kontinuierlich auf ihre Plausibilität geprüft, indem die Istwerte mit Sollwerten verglichen werden. Die Sollwerte ergeben sich aus der Annahme, dass ein Fahrzeug A bei konstanter Geschwindigkeit v die Fahrtrichtung unverändert beibehält und dem Wissen um den zeitlichen Abstand der Messvorgänge. Dabei werden Einzelmesswerte, die nicht plausibel erscheinen, d. h. Geschwindigkeiten v, Entfernungen E oder Messwinkel, die einem angemessenen Fahrzeug A zum nächsten Messzeitpunkt unmöglich zugeordnet werden können, z. B. entstehend durch Mehrfachreflexionen oder Reflexionen an stehenden Objekten, herausgefiltert, d. h. sie nehmen nicht an einer Mittelwertbildung teil. Über eine permanente Anpassung der Sollwerte für die Wertepaare bzw. Wertetripel an die Istwerte für die Wertepaare bzw. Wertetripel wird für die einzelnen Fahrzeuge A jeweils eine Aufeinanderfolge von Wertepaaren bzw. Wertetripein gewonnen, welche die Fahrzeugspur des betreffenden Fahrzeuges A repräsentieren.

Die Messungen erfolgen z. B. über einen Zeitraum von ca. 100 ms bis hin zu einigen Sekunden, je nach Geschwindigkeit v zwischen Eintritt in und Austritt aus dem Radarkegel 4 z. B. in einem Abstand von 20 ms, wodurch die Fahrzeugspuren mit einer hohen Genauigkeit bestimmt werden können.

Von der Ermittlung nur eines Entfernungswertes E, der als Kriterium eine grobe Bestimmung der Durchfahrstrecke d erlaubt, bis hin zur Ermittlung der Fahrzeugspur, die sehr genau der tatsächlichen Durchfahrstrecke d entspricht, lässt sich die Durchfahrstrecke d zunehmend genauer ermitteln und damit aus der Fahrstrecke s die Fahrzeuglänge L genauer bestimmen.

Eine höhere Genauigkeit ist jedoch auch mit einem höheren gerätetechnischen und rechentechnischen Aufwand verbunden, weshalb je nach Anwendung und sich daraus ergebenden Genauigkeitsforderungen die eine oder andere Ausführung von Vorteil ist.

In jedem Fall wird ein für die jeweilige Anwendung hinreichend genaues Längenkriterium ermittelt, welches die Fahrzeuglänge L mehr oder weniger genau bestimmt, um die Fahrzeuge A zu klassifizieren.
Die ermittelte Fahrzeuglänge L wird anschließend mit zuvor abgespeicherten für die einzelnen Fahrzeugklassen typischen Fahrzeuglängen Lₘ bzw. Fahrzeuglängenbereichen verglichen, um das Fahrzeug A einer bestimmten Klasse, z. B. Motorräder, Pkws, Lkws, zuzuordnen.

Vorteilhaft wird die Klassifizierung über die Ermittlung einer dem Fahrzeug A zugeordneten Signalform M verifiziert. Bedingt durch die unterschiedlichen Eigenschaften der Fahrzeuge A, z. B. die Reflektivität der Oberfläche und das durch die Radarstrahlung beaufschlagte Profil in Größe und Form, bewirken diese Signalformen Mₘ in einem unterschiedlichen Profil und Amplitude im Frequenz- oder Zeitbereich. Durch empirische Versuche werden in der Praxis für die jeweiligen Fahrzeugklassen typische Signalformen Mₘ ermittelt und als Muster abgespeichert. Die dann bei der Messung tatsächlich gewonnenen Signalformen M werden dann mit diesen typischen Signalformen Mₘ verglichen und diesen zugeordnet.
Auf diese Weise ist eine Bestätigung der über das Längekriterium vorgenommenen Klassifizierung möglich, ohne zusätzliche Messungen, allein mit den ohnehin erhaltenen Messwerten.

Gleich bekannten Verfahren kann die gemessene Geschwindigkeit v mit einer Höchstgeschwindigkeit verglichen werden und bei Überschreitung dieser Höchstgeschwindigkeit ein Signal abgegeben werden, welches eine mit dem Radargerät 5 verbundene Kamera 10 auslöst, um eine Aufnahme zu erstellen, auf der das den Verkehrsverstoß begangene Fahrzeug A abgebildet ist.

Erfindungsgemäß wird dieses Signal nur dann abgegeben, wenn die Geschwindigkeit v die Höchstgeschwindigkeit überschritten hat, die der Fahrzeugklasse zugeordnet wird, der auch das angemessene Fahrzeug A zugeordnet werden kann. In die Aufnahme werden zusätzlich zu den aus dem Stand der Technik bekannten Daten wie z. B. Datum, Uhrzeit, Geschwindigkeit und gegebenenfalls Entfernung E auch die Fahrzeugklasse und/oder ein Wert für die Fahrzeuglänge L angegeben. Die Angabe der Fahrzeuglänge L und/oder der Fahrzeugklasse kann auch als Verifikation dafür dienen, welches Fahrzeug A in einer Gruppe von Fahrzeugen A angemessen wurde. Für eine solche Anwendung ist z. B. eine möglichst genaue Längenermittlung von Bedeutung, über die auch Fahrzeuge A innerhalb einer Klasse voneinander unterschieden werden, wenn sie sich durch ihre Länge ausreichend unterscheiden.

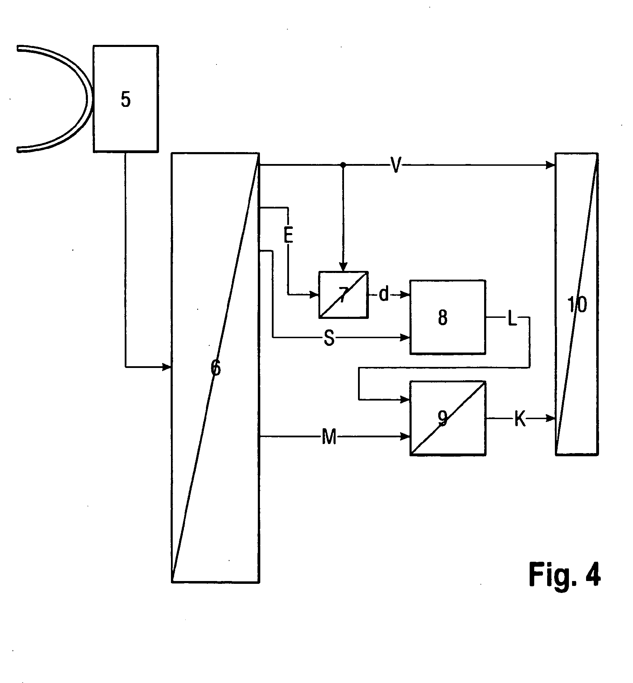

Nachfolgend soll an Hand von Fig. 4 eine erfindungsgemäße Vorrichtung beschrieben werden, mit welcher ein erfindungsgemäßes Verfahren durchgeführt werden kann.

Die Vorrichtung umfasst ein Radargerät 5, welches modulierte Dauerradarsignale aussendet und empfängt sowie eine mit dem Radargerät 5 verbundene Auswerte- und Speichereinheit 6, welche so ausgelegt ist, dass sie aus den empfangenen Radarsignalen Messwerte für die Geschwindigkeit v, die Entfernung E und die Fahrstrecke s bildet als auch die Signalform M und die Zeitpunkte des Ein- tₐ und Austretens t_{b} speichert.

Die Auswerte- und Speichereinheit 6 ist mit einer Recheneinheit 7 verbunden, die so ausgelegt ist, dass sie aus den Entfernungswerten E und den Geschwindigkeitswerten v bzw. der Zeitdifferenz zwischen Ein- und Austrittszeitpunkt tₐ- t_{b} die Durchfahrstrecke d ermittelt, welche einem nachgeordneten Differenzbildner 8 zugeführt wird. Der Differenzbildner 8 ist ebenfalls mit der Auswerte- und Speichereinheit 6 verbunden und erhält von ihr einen Wert für eine Fahrstrecke s. Aus der Fahrstrecke s und der Durchfahrstrecke d wird über eine Differenzbildung im Differenzbildner 8 die Fahrzeuglänge L ermittelt.

Die ermittelte Fahrzeuglänge L wird einem Vergleicher 9, der mit dem Differenzbildner 8 und der Auswerte- und Steuereinheit 6 verbunden ist, zur Verfügung gestellt. Der Vergleicher 9 ist so ausgelegt, dass er die ermittelte Fahrzeuglänge L, die er vom Differenzbildner 8 erhält und die Signalform M jeweils einer Fahrzeugklasse zuordnet und anschließend vergleicht, ob die gleiche Fahrzeugklasse zugeordnet wurde, was gegebenenfalls als Bestätigung der Fahrzeugklasse gilt.

Damit die Fahrzeuglänge L und die Signalform M jeweils einer Fahrzeugklasse zugeordnet werden können, sind im Differenzbildner 8 typische Fahrzeuglängen Lₘ und typische Signalformen Mₘ, die jeweils eindeutig einer Fahrzeugklasse zugeordnet werden können, abgespeichert.
Sofern die Fahrzeugklasse K bestätigt wird, wird sie gemeinsam mit der Geschwindigkeit v an eine Kamera 10 weitergeleitet, um diese Werte in der Kameraaufzeichnung abzubilden.

### Bezugszeichenliste

- A1: erstes Fahrzeug
- A2: zweites Fahrzeug
- A3: drittes Fahrzeug
- 4: Radarkegel
- 5: Radargerät
- 6: Auswerte- und Speichereinheit
- 7: Recheneinheit
- 8: Differenzbildner
- 9: Vergleicher
- 10: Kamera

- α: Öffnungswinkel des Radarkegels 4
- β: Aufstellwinkel
- v: Geschwindigkeit
- M: Signalform
- K: Klassifikation
- E: mittlerer Entfernungswert
- Lₘ: gespeicherte typische Fahrzeuglänge
- Mₘ: gespeicherte typische Signalform

- a: Abstand Radargerät 5 zur Fahrbahn
- tₐ: Zeitpunkt des Eintretens eines Fahrzeuges A in den Radarkegel 4
- t1ₐ: Zeitpunkt des Eintretens des ersten Fahrzeuges A1 in den Radarkegel 4
- t2ₐ: Zeitpunkt des Eintretens des zweiten Fahrzeuges A2 in den Radarkegel 4
- t3ₐ: Zeitpunkt des Eintretens des dritten Fahrzeuges A3 in den Radarkegel 4

- t_{b}: Zeitpunkt des Austretens eines Fahrzeuges A aus dem Radarkegel 4
- t1_{b}: Zeitpunkt des Austretens des ersten Fahrzeuges A1 aus dem Radarkegel 4
- t2_{b}: Zeitpunkt des Austretens des zweiten Fahrzeuges A2 aus dem Radarkegel 4
- t3_{b}: Zeitpunkt des Austretens des dritten Fahrzeuges A3 aus dem Radarkegel 4

- Eₐ: Entfernung eines Fahrzeuges A vom Radargerät 5 zum Zeitpunkt tₐ
- E1ₐ: Entfernung des ersten Fahrzeuges A1 vom Radargerät 5 zum Zeitpunkt t1ₐ
- E2ₐ: Entfernung des zweiten Fahrzeuges A2 vom Radargerät 5 zum Zeitpunkt t1ₐ
- E3ₐ: Entfernung des dritten Fahrzeuges A3 vom Radargerät 5 zum Zeitpunkt t1ₐ

- E_{b}: Entfernung eines Fahrzeuges A vom Radargerät 5 zum Zeitpunkt t_{b}
- E1_{b}: Entfernung des ersten Fahrzeuges A1 vom Radargerät 5 zum Zeitpunkt t1_{b}
- E2_{b}: Entfernung des zweiten Fahrzeuges A2 vom Radargerät 5 zum Zeitpunkt t1_{b}
- E3_{b}: Entfernung des dritten Fahrzeuges A3 vom Radargerät 5 zum Zeitpunkt t1_{b}

- s: Fahrstrecke eines Fahrzeuges A durch den Radarkegel 4
- s1: Fahrstrecke des ersten Fahrzeuges A1 durch den Radarkegel 4
- s2: Fahrstrecke des zweiten Fahrzeuges A2 durch den Radarkegel 4
- s3: Fahrstrecke des dritten Fahrzeuges A3 durch den Radarkegel 4

- e: Strecke, die ein Fahrzeug A zurücklegt

- L: Fahrzeuglänge eines Fahrzeuges A
- L1: Fahrzeuglänge des ersten Fahrzeuges A1
- L2: Fahrzeuglänge des zweiten Fahrzeuges A2
- L3: Fahrzeuglänge des dritten Fahrzeuges A3

- d: Durchfahrstrecke eines Fahrzeuges A durch den Radarkegel 4
- d1: Durchfahrstrecke des ersten Fahrzeuges A1 durch den Radarkegel 4
- d2: Durchfahrstrecke des zweiten Fahrzeuges A2 durch den Radarkegel 4
- d3: Durchfahrstrecke des dritten Fahrzeuges A3 durch den Radarkegel 4

## Patentansprüche

1. Verfahren zur Klassifizierung von Fahrzeugen (A) an Hand ihrer Fahrzeuglänge (L), bei dem eine Radarstrahlung in Form eines Radarkegels (4) mit einem Öffnungswinkel (α) horizontal unter einem spitzen Aufstellwinkel (β) mit einem Abstand (a) zu einer Fahrbahn auf die Fahrbahn gerichtet wird und durch Auswertung der Radarsignale, bewirkt durch Reflexion an einem auf der Fahrbahn fahrenden Fahrzeug (A) eine Fahrstrecke (s) ermittelt wird, über die das Fahrzeug (A) fahrend die Radarstrahlung reflektiert,
wobei aus den Radarsignalen wenigstens ein Entfernungswert (E) ermittelt wird, mittels dem auf eine Durchfahrstrecke (d) geschlossen wird, über die das Fahrzeug (A) den Radarkegel (4) durchfährt und aus der Differenz zwischen der Fahrstrecke (s) und der Durchfahrstrecke (d) die Fahrzeuglänge (L) bestimmt wird, welche mit für einzelne Fahrzeugklassen typischen Fahrzeuglängen (Lₘ) verglichen wird, um das Fahrzeug (A) zu klassifizieren.

2. Verfahren nach Anspruch 1, **dadurch gekennzeichnet,**
**dass** die Fahrstrecke (s), die das Fahrzeug (A) während einer Radarschwingung zurücklegt, aus der Anzahl der reflektierten Radarschwingungen und der Strecke (e), bestimmt durch die Wellenlänge der Radarschwingung und den Aufstellwinkel (β), ermittelt wird.

3. Verfahren nach Anspruch 1, **dadurch gekennzeichnet,**
**dass** die Fahrstrecke (s) aus der Durchfahrzeit, bestimmt durch die Zeitpunkte des Eintretens in (tₐ) und des Austretens aus (t_{b}) dem Radarkegel (4) und der gemessenen Geschwindigkeit (v) bestimmt wird.

4. Verfahren nach einem der Ansprüche 1 - 3, **dadurch gekennzeichnet,**
**dass** ein Entfernungswert (E) ermittelt wird, dem eine zuvor abgespeicherte Durchfahrstrecke (d) zugeordnet wird.

5. Verfahren nach einem der Ansprüche 1 - 3, **dadurch gekennzeichnet,**
**dass** zum Zeitpunkt des Eintretens (tₐ) des Fahrzeuges (A) und zum Zeitpunkt des Austretens (t_{b}) des Fahrzeuges (A) aus dem Radarkegel (4) Entfernungswerte (E) erfasst werden und aus den Entfernungswerten (E) über den Öffnungswinkel (α) und den Aufstellwinkel (β) die Durchfahrstrecke (d) errechnet wird.

6. Verfahren nach einem der Ansprüche 1 - 3, **dadurch gekennzeichnet,**
**dass** die Entfernungswerte (E) über die gesamte Durchfahrzeit ermittelt werden und aus den Entfernungswerten (E) und der Geschwindigkeit (v) die Fahrzeugspur ermittelt wird, deren Länge der Durchfahrstrecke (d) entspricht.

7. Verfahren nach einem der Ansprüche 4 - 6, **dadurch gekennzeichnet,**
**dass** der Messbereich, bestimmt durch den Öffnungswinkel (α), eingeschränkt wird, indem aus den Radarsignalen Winkelwerte ermittelt werden und nur die Messwerte zur Ermittlung der Fahrstrecke (s) und der Durchfahrstrecke (d) herangezogen werden, denen Winkelwerte zugeordnet sind, die zwischen vorbestimmten Winkelwerten liegen.

8. Verfahren nach einem der Ansprüche 1 - 7, **dadurch gekennzeichnet,**
**dass** die Signalform (M) der reflektierten Radarstrahlung, bewirkt durch die Reflektivität und die Größe und Form des beaufschlagten Profils des Fahrzeuges (A), abgespeichert wird und mit zuvor abgespeicherten, für einzelne Fahrzeugklassen typischen Signalformen (Mₘ) verglichen wird, um die getroffene Klassifizierung zu verifizieren.

9. Verfahren nach einem der Ansprüche 1- 8, **dadurch gekennzeichnet,**
**dass** von dem klassifizierten Fahrzeug (A) eine Aufnahme erstellt wird und in der Aufnahme eine Angabe zur Fahrzeuglänge (L) abgebildet wird.

10. Verfahren nach einem der Ansprüche 1 - 8, **dadurch gekennzeichnet,**
**dass** von dem klassifizierten Fahrzeug (A) ein Aufnahme erstellt wird und in der Aufnahme eine Angabe für die Klassifikation (K) abgebildet wird.

11. Verfahren nach einem der Ansprüche 9 oder 10, **dadurch gekennzeichnet,**
**dass** nur dann eine Aufnahme erstellt wird, wenn dem klassifizierten Fahrzeug (A) eine Geschwindigkeit (v) zugeordnet wird, die über der Höchstgeschwindigkeit für die betreffende Fahrzeugklasse liegt.

12. Verfahren nach Anspruch 11, **dadurch gekennzeichnet,**
**dass** eine Front und eine Heckaufnahme vom klassifizierten Fahrzeug (A) erstellt wird, wenn dieses als Motorrad oder Trike klassifiziert wird.

13. Vorrichtung zur Klassifizierung von Fahrzeugen (A) an Hand ihrer Fahrzeuglänge (L) mit einem Radargerät (5), welches unter einem spitzen Aufstellwinkel (β) mit einem Abstand (a) zu einer Fahrbahn eine Radarstrahlung in Form eines Radarkegels (4) mit einem Öffnungswinkel (α) horizontal über die Fahrbahn richtet und von einem Fahrzeug (A) reflektierte Radarstrahlung empfängt und Radarsignale bildet sowie einer mit dem Radargerät (5) verbundenen Auswerte- und Speichereinheit (6), die geeignet ist, aus den Radarsignalen die Fahrstrecke (s) zu ermitteln, über die ein Fahrzeug (A) fahrend Radarstrahlung reflektiert,
wobei die Auswerte- und Speichereinheit (6) so ausgelegt ist, dass sie wenigstens einen Entfernungswert (E) bildet, mittels dem in einer nachgeordneten Recheneinheit (7) eine Durchfahrstrecke (d) bestimmt wird, über die das Fahrzeug (A) den Radarkegel (4) durchfährt und ein Differenzbildner (8) vorhanden ist, der verbunden mit der Recheneinheit (7) und der Auswerte- und Speichereinheit (6) so ausgelegt ist, dass er aus der Differenz zwischen der Fahrstrecke (s) und der Durchfahrstrecke (d) die Fahrzeuglänge (L) ermittelt, um einen mit dem Differenzbildner (8) verbundenen, nachgeordneten Vergleicher (9) zur Verfügung zu stellen, der geeignet ist, die ermittelte Fahrzeuglänge (L) mit abgespeicherten, für bestimmte Fahrzeugklassen typischen Fahrzeuglängen (Lₘ) zu vergleichen, um das Fahrzeug (A) zu klassifizieren.

14. Vorrichtung nach Anspruch 13, **dadurch gekennzeichnet,**
**dass** die Auswerte- und Speichereinheit (6) dafür vorgesehen ist, die Signalform (M) der reflektierten Radarstrahlung, bewirkt durch die Reflektivität und die größe und Form des beaufschlagten Profils des Fahrzeuges (A), zu speichern und der Vergleicher (9) mit der Auswerte- und Speichereinheit (6) verbunden und so ausgelegt ist, dass er die Signalform (M) mit abgespeicherten, für bestimmte Fahrzeugklassen typischen Signalformen (Mₘ) vergleicht, um die über die Fahrzeuglänge (L) getroffene Klassifizierung zu verifizieren.

15. Vorrichtung nach Anspruch 13 oder 14, **dadurch gekennzeichnet,**
**dass** eine Kamera (10) zur Erstellung einer Aufnahme vom klassifizierten Fahrzeug (A) vorhanden ist und die Fahrzeuglänge (L) und/oder die Klassifikation (K) in der Aufnahme angezeigt ist.

## Claims

1. Method for classification of vehicles (A) on the basis of their vehicle length (L), wherein radar radiation in the form of a radar cone (4) with an angle of aperture (α) is directed, at an acute angle of installation (β) and at a distance (a) from a roadway, horizontally onto the roadway, and wherein radar signals, resulting from reflection by a vehicle (A) driving on the roadway, are used to determine a driven distance (s) over which the vehicle (A) reflects the radar radiation while driving,
wherein the radar signals are used to determine at least one distance value (E) that allows to deduce a traversing distance (d) over which the vehicle (A) passes through the radar cone (4), and the difference between the driven distance (s) and the traversing distance (d) is used to determine the vehicle length (L), which is compared with vehicle lengths (Lₘ) that are typical of individual vehicle classes, so as to classify the vehicle (A).

2. Method according to claim 1, **characterized in that** the driven distance (s) covered by the vehicle (A) during one radar oscillation is obtained from the number of reflected radar oscillations and from the distance (e), determined by the wavelength of the radar oscillation and the angle of installation (β).

3. Method according to claim 1, **characterized in that** the driven distance (s) is determined by the traversing duration, which is obtained from the times at which the vehicle enters (tₐ) and exits (t_{b}) the radar cone (4) and from the measured speed (v).

4. Method according to any one of claims 1 to 3, **characterized in that** a distance value (E) is determined, to which a previously stored traversing distance (d) is allocated.

5. Method according to any one of claims 1 to 3, **characterized in that** distance values (E) are recorded at the time when the vehicle (A) enters (tₐ) the radar cone (4) and at the time when the vehicle (A) exits (t_{b}) the radar cone (4), and the traversing distance (d) is calculated from the distance values (E), via the angle of aperture (α) and the angle of installation (β).

6. Method according to any one of claims 1 to 3, **characterized in that** the distance values (E) are determined over the entire traversing period, and the distance values (E) as well as the speed (v) are used to determine the vehicle track whose length corresponds to the traversing distance (d).

7. Method according to any one of claims 4 to 6, **characterized in that** the measurement range, determined by the angle of aperture (α), is limited **in that** angle values are determined from the radar signals and that, in determining the driven distance (s) and the traversing distance (d), only those measured values are used which have angle values allocated to them that lie between predetermined angle values.

8. Method according to any one of claims 1 to 7, **characterized in that** the signal shape (M) of the reflected radar radiation, caused by the reflectivity as well as the size and shape of the profile of the vehicle (A) exposed to said radiation, is stored and is compared with previously stored signal shapes (Mₘ), which are typical of individual vehicle classes, in order to verify the classification made.

9. Method according to any one of claims 1 to 8, **characterized in that** an image of the classified vehicle (A) is recorded and an indication of the vehicle length (L) is displayed in the recorded image.

10. Method according to any one of claims 1 to 8, **characterized in that** an image of the classified vehicle (A) is recorded and an indication of the classification (K) is displayed in the recorded image.

11. Method according to any one of claims 9 or 10, **characterized in that** an image is recorded only if a speed (v) exceeding the maximum speed for the respective vehicle class is allocated to the classified vehicle (A).

12. Method according to claim 11, **characterized in that** front and rear images are taken of the classified vehicle (A) when the latter has been classified as a motor cycle or a trike.

13. Apparatus for classification of vehicles (A) on the basis of their vehicle length (L), comprising a radar device (5), which directs radar radiation in the form of a radar cone (4) with an angle of aperture (α), at an acute angle of installation (β) and at a distance (a) from a roadway, horizontally across the roadway, and which receives radar radiation reflected by a vehicle (A) and forms radar signals, said apparatus further comprising an evaluation and storage unit (6) that is connected to the radar device (5) and is suitable to determine from the radar signals the driven distance (s) over which a vehicle (A) reflects radar radiation during driving,
wherein the evaluation and storage unit (6) is designed to form at least one distance value (E) by means of which a subsequently arranged arithmetic unit (7) determines a traversing distance (d) over which the vehicle (A) passes through the radar cone (4), and a differentiator (8) is present that, connected to the arithmetic unit (7) and the evaluation and storage unit (6), is designed to determine the vehicle length (L) from the difference between the driven distance (s) and the traversing distance (d), in order to provide a subsequent comparator (9), which is connected to the differentiator (8) and is suitable to compare the determined vehicle length (L) with stored vehicle lengths (Lₘ) that are typical of certain vehicle classes, so as to classify the vehicle (A).

14. Apparatus according to claim 13, **characterized in that** the evaluation and storage unit (6) is provided to store the signal shape (M) of the reflected radar radiation, caused by the reflectivity as well as the size and shape of the profile of the vehicle (A) exposed to said radiation, and the comparator (9) is connected to the evaluation and storage unit (6) and designed such that it compares the signal shape (M) with stored signal shapes (Mₘ) that are typical of certain vehicle classes, so as to verify the classification made on the basis of the vehicle length (L).

15. Apparatus according to claim 13 or 14, **characterized in that** a camera (10) is present for recording an image of the classified vehicle (A), and the vehicle length (L) and/or the classification (K) is displayed in the recorded image.

## Revendications

1. Procédé de classification de véhicules (A) sur base de leur longueur de véhicule (L), dans lequel un rayonnement radar ayant la forme d'un cône radar (4) avec un angle d'ouverture (α) est horizontalement dirigé, sous un angle aigu d'installation (β) et à une distance (a) d'une chaussée, sur ladite chaussée, et dans lequel procédé des signaux radar, résultant de la réflexion d'un véhicule (A) circulant sur ladite chaussée, sont utilisés pour déterminer un trajet parcouru (s) sur lequel ledit véhicule (A) circulant réfléchit ledit rayonnement radar,
lesdits signaux radar étant utilisés pour déterminer au moins une valeur de distance (E) permettant de déduire un trajet de passage (d) sur lequel le véhicule (A) passe par le cône radar (4), et la différence entre le trajet parcouru (s) et le trajet de passage (d) est utilisée pour déterminer la longueur de véhicule (L), qui est comparée avec des longueurs de véhicules (Lₘ) typiques de classes de véhicules particulières, afin de classifier le véhicule (A).

2. Procédé selon la revendication 1, **caractérisé en ce que** le trajet (s) parcouru par le véhicule (A) pendant une oscillation du radar est obtenu à partir du nombre d'oscillations radar réfléchies et à partir de la distance (e), déterminée à partir de la longueur d'ondes de l'oscillation radar et de l'angle d'installation (β).

3. Procédé selon la revendication 1, **caractérisé en ce que** le trajet parcouru (s) est déterminé à partir de la durée de passage, qui est obtenue à partir des temps d'entrée (tₐ) et de sortie (t_{b}) du véhicule dans le cône radar (4) et à partir de la vitesse mesurée (v).

4. Procédé selon l'une quelconque des revendications 1 à 3, **caractérisé en ce qu'**une valeur de distance (E) est déterminée à laquelle on affecte un trajet de passage (d) mémorisé d'avance.

5. Procédé selon l'une quelconque des revendications 1 à 3, **caractérisé en ce que** des valeurs de distance (E) sont saisies au temps d'entrée (tₐ) du véhicule (A) et au temps de sortie (t_{b}) du véhicule (A) dans le cône radar (4), et que l'on calcule le trajet de passage (d) à partir desdites valeurs de distance (E), au moyen de l'angle d'ouverture (α) et de l'angle d'installation (β).

6. Procédé selon l'une quelconque des revendications 1 à 3, **caractérisé en ce que** les valeurs de distance (E) sont déterminées pendant toute la durée de passage, et que l'on utilise les valeurs de distance (E) ainsi que la vitesse (v) pour déterminer la trace véhicule dont la longueur correspond au trajet de passage (d).

7. Procédé selon l'une quelconque des revendications 4 à 6, **caractérisé en ce que** la gamme de mesure, déterminée par l'angle d'ouverture (α), est limitée en déterminant des valeurs d'angle à partir des signaux radar et en utilisant, pour la détermination du trajet parcouru (s) et du trajet de passage (d), seulement les valeurs mesurées auxquelles sont affectées des valeurs d'angles qui se trouvent entre des valeurs d'angles prédéterminées.

8. Procédé selon l'une quelconque des revendications 1 à 7, **caractérisé en ce que** la forme de signal (M) du rayonnement radar réfléchi, résultant de la réflectivité ainsi que de la dimension et de la forme du profil du véhicule (A) soumis audit rayonnement, est mémorisée et est comparée avec des formes de signal (Mₘ) mémorisées d'avance, qui sont typiques pour des classes de véhicules particulières, afin de vérifier la classification effectuée.

9. Procédé selon l'une quelconque des revendications 1 à 8, **caractérisé en ce qu'**une image du véhicule (A) classifié est enregistrée et une indication de la longueur (L) du véhicule est affichée dans ladite image enregistrée.

10. Procédé selon l'une quelconque des revendications 1 à 8, **caractérisé en ce qu'**une image du véhicule classifié (A) est enregistrée et une indication de la classification (K) est affichée dans ladite image enregistrée.

11. Procédé selon l'une quelconque des revendications 9 ou 10, **caractérisé en ce qu'**une image n'est enregistrée que lors de l'allocation au véhicule classifié (A) d'une vitesse (v) excédant la vitesse maximale de la classe de véhicules respective.

12. Procédé selon la revendication 11, **caractérisé en ce que** l'on prend une image frontale et une image arrière du véhicule classifié (A) lorsque celui-ci est classifié comme un motocycle ou un trike.

13. Dispositif de classification de véhicules (A) sur base de leur longueur de véhicule (L), ledit dispositif comprenant un appareil radar (5), qui dirige, sous un angle d'installation (β) aigu et à une distance (a) d'une chaussée, un rayonnement radar sous la forme d'un cône radar (4) avec un angle d'ouverture (α) horizontalement à travers ladite chaussée et qui reçoit du rayonnement radar réfléchi par un véhicule (A) et forme des signaux radar, ledit dispositif comportant en plus une unité d'évaluation et de mémorisation (6), qui est reliée à l'appareil radar (5) et qui est apte à déterminer, à partir des signaux radar, le trajet parcouru (s) sur lequel un véhicule (A) circulant réfléchit le rayonnement radar,
l'unité d'évaluation et de mémorisation (6) étant constituée de manière à former au moins une valeur de distance (E) au moyen de laquelle une unité arithmétique (7) branchée en aval détermine un trajet de passage (d) sur lequel le véhicule (A) passe par le cône radar (4), et un différentiateur (8) étant prévu qui, relié à l'unité arithmétique (7) et à l'unité d'évaluation et de mémorisation (6), est constitué de manière à déterminer la longueur de véhicule (L) à partir de la différence entre le trajet parcouru (s) et le trajet de passage (d), afin de faire disponible un comparateur (9) branché en aval, qui est relié audit différentiateur (8) et qui est apte à comparer la longueur de véhicule (L) déterminée avec des longueurs de véhicule (Lₘ) mémorisées, qui sont typiques pour certaines classes de véhicules, afin de classifier le véhicule (A).

14. Dispositif selon la revendication 13, **caractérisé en ce que** l'unité d'évaluation et de mémorisation (6) est destinée à mémoriser la forme de signal (M) du rayonnement radar réfléchi, résultant de la réflectivité ainsi que de la dimension et de la forme du profil du véhicule (A) soumis audit rayonnement, et que le comparateur (9) est relié à l'unité d'evaluation et de mémorisation (6) et constitué de manière à comparer la forme de signal (M) avec des formes de signal (Mₘ) mémorisées qui sont typiques pour certaines classes de véhicules, afin de vérifier la classification effectuée sur base de la longueur de véhicule (L).

15. Dispositif selon la revendication 13 ou 14, **caractérisé en ce que** l'on prévoit une caméra (10) pour l'enregistrement d'une image du véhicule classifié (A), et que la longueur de véhicule (L) et/ou la classification (K) est affichée dans l'image enregistrée.
